# EUROPÄISCHE PATENTANMELDUNG

(11) **EP 4 344 839 A1**
(43) Veröffentlichungstag der Anmeldung: **03.04.2024**
(21) Anmeldenummer: 23192773.2
(22) Anmeldetag: 22.08.2023
(51) Int. Cl.: B26D 5/00, B26D 7/27, B26D 7/32

(54) **VERFAHREN ZUM AUTOMATISCHEN EINHALTEN EINER VORGEGEBENEN PORTIONS-ANORDNUNG IN EINER TRAY-MULDE SOWIE HIERFÜR GEEIGNETE VERPACKUNGS-VORRICHTUNG**

(30) Priorität: 29.08.2022 DE 102022121774
(71) Anmelder: MULTIVAC Sepp Haggenmüller SE & Co. KG, 87787 Wolfertschwenden (DE)
(72) Erfinder: Regien, Sven, 87724 Ottobeuren (DE); Berchtold, Markus, 87787 Wolfertschwenden (DE); Wölfle, Johann, 87634 Obergünzburg (DE); Bumann, Albert, 87730 Bad Grönenbach (DE)
(74) Vertreter: Weickmann & Weickmann PartmbB

(57) **Zusammenfassung**

Um zu erreichen, dass die Portionen optisch ansprechend, also
- zentriert,
- mit gleichmäßigem Scheibenabstand (19) in Längsrichtung (10*) und auch in Querrichtung (11) nicht zu stark differierend und
- insbesondere nicht auf dem Siegel-Rand (R) des Mulden-Bandes (22) aufliegend
in dessen Mulde (M) liegen, wird direkt in der Verpackungsmaschine (100) mittels einer Kamera (26) die entsprechende Ist-Anordnung einer Portion ermittelt und bei zu starker Abweichung von der Soll-Anordnung die Gestehungs-Parameter in der stromaufwärts liegenden
- Portions-Erzeugungseinheit (13), insbesondere dem Portionier-Band (17a) und/oder der Schneideinheit (7) der Aufschneider-Maschine (1),
und/oder
- der Portions-Anlieferungseinheit (14)
und/oder
- der Verpackungs-Anlieferungseinheit (15)
nachgeregelt, also über die Lücke zwischen Portionier-Band (17a) und Verpackungsmaschine (100) hinweg.

## Beschreibung

### I. Anwendungsgebiet

Die Erfindung betrifft die Anordnung einer aus mehreren Scheiben bestehenden, insbesondere geschindelten, Portion auf einem Verpackungselement, insbesondere in einer Mulde eines Mulden-Bandes.

### II. Technischer Hintergrund

Die auf einem solchen Verpackungselement, insbesondere in der Mulde, abgelegte Portion soll die richtige Größe und Gestalt besitzen und in der z.B. Mulde an der richtigen Position abgelegt sein, sodass sich ein optisch ansprechendes Äußeres ergibt, beispielsweise zentrisch in der Mulde liegen und vor allem nicht auf dem die Mulde umgebenden Siegelrand liegen, da dies ein dichtes Aufsiegeln einer die Mulde verschließen Siegelfolie verhindert.

Die in der Verpackungs-Maschine abzupackenden - also abzulegenden und zu versiegelnden - Portionen werden in der Regel stromaufwärts davon mittels einer Hochleistungs-Aufschneide-Maschine, einem sogenannten Slicer, aus stangenförmigen Produktsträngen, den sogenannten Kalibern, aufgeschnitten, meist mehrspurig nebeneinander durch das gleiche Messer, beispielsweise ein rotierendes Sichelmesser.

Jede abgetrennte Scheibe fällt auf eine Abförder-Einheit, die meist aus drei in Förderrichtung hintereinander aufeinander folgenden Förderbändern besteht, wovon vor allem das erste, das sogenannte Portionier-Band, in der Regel vielfach verstellbar und vor allen schrittweise antreibbar ist, auf dem die Scheiben einer Spur nacheinander in einem bestimmten Abstand auftreffen, sodass z.B. eine geschindelte Portion entsteht.

Von dieser Abförder-Einheit - die eine selbstständige Einheit sein kann, aber meist Bestandteil des Slicers ist, da für das Erzeugen korrekter Positionen sowohl die Abförder-Einheit, insbesondere das Portionier-Band, in exakter zeitlicher und räumlicher Abstimmung zur Bewegung des Messer gesteuert werden muss - werden die mehrspurig vom Slicer abtransportierten Portionen in der Regel nicht direkt in die Verpackungs-Maschine eingegeben oder eingelegt, sondern dazwischen befindet sich ein Einlegeband, meist ein in der Breite über alle Spuren durchgehendes Förderband. Dieser sogenannte Einleger ist in Förderrichtung meist nach unten geneigt und wirft die herantransportierten Portionen in die entsprechend der Spuranzahl in mehreren Reihen nebeneinander in einem Mulden-Band ausgebildeten Mulden ab, das unter dem Einleger durchläuft.

Aufgrund einer Vielzahl von Einflussfaktoren, etwa
- die Fliehkraft, erzeugt durch das schnell rotierende Messer,
- das Anhaften der Scheiben am Messer,
- die nicht konstanten Beschleunigungen aller Spuren der Abförder-Einheit beim Spur-individuell ausgebildeten Abförder-Einheiten,
können die Portionen bereits auf dem Portionier-Band nicht in der gewünschten, vorgegebenen Form oder Größe oder Relativlage der Portionen zueinander liegen.

So kann die Portion zu lang oder zu kurz sein, die Längsabstände der Scheiben innerhalb der Portion ungleichmäßig sein oder die Scheiben in Längsrichtung nicht in genau einer Reihe liegen, sondern einen zu großen seitlichen Versatz zueinander aufweisen, was bisher teilweise bereits innerhalb der Abförder-Einheit oder auf dem Portionier-Band zu korrigieren versucht wird.

Deshalb es bekannt, mittels einer Kamera die Lage der Portionen und deren einzelne Scheiben bereits in der Abförder-Einheit des Slicers, etwa auf dem Portionier-Band, zu erfassen, teilweise noch während des Entstehens der Portion, und durch Nachregeln der Gestehungs-Parameter die Gestaltung der Portion wenigstens für nachfolgende Portionen zu verbessern, u.a. durch Querverfahrung der einzelnen Spuren oder des gesamten Portionier-Bandes zwischen dem Auftreffen zweier aufeinander folgender Scheiben.

Doch selbst, wenn die auf dem Portionier-Band erzeugte Portion den dortigen Soll-Vorgaben entspricht, kann es durch die nachfolgenden Bewegungen der Portion bis zum Verpackungs-Element, beispielsweise die Übergaben zwischen einzelnen Förderern, insbesondere an den geneigten Einleger, und/oder weitere Übergaben wegen zwischen der Abförder-Einheit des Slicers und dem Einleger angeordnetem Puffer, zu erneuten unerwünschten Veränderungen der Größe, Gestalt und Position der Portionen kommen.

### III. Darstellung der Erfindung

### a) Technische Aufgabe

Es ist daher die Aufgabe gemäß der Erfindung, ein Verfahren zur Verfügung zu stellen, mit den Portionen mit einer vorgegebenen Gestalt, Größe und AblagePosition auf einem Verpackungs-Element, insbesondere in der Tray-Mulde eines Mulden-Bandes oder eines bereits vereinzelten Trays erzeugt werden können, sowie eine diesbezügliche Verpackungs-Vorrichtung aus einer Verpackungs-Maschine einerseits, und andererseits einer Verpackungs-Anliefereinheit, einer Portions-Anliefereinheit sowie einer Portions-Erzeugungseinheit zur Verfügung zu stellen.

### b) Lösung der Aufgabe

Diese Aufgabe wird durch die Merkmale der Ansprüche 1 und 15 gelöst. Vorteilhafte Ausführungsformen ergeben sich aus den Unteransprüchen.

Zunächst soll klargestellt werden, dass unter einer Portions-Anordnung der Portion auf oder in einem Verpackungs-Element nicht nur die Portions-Lage insgesamt relativ zum Verpackungs-Element verstanden wird, sondern auch die Anordnung innerhalb der Portion, also beispielsweise die in Transportrichtung gesehene gemessene Länge oder die quer dazu horizontal gemessene Breite der Portion oder die Höhe der Portion, letzteres insbesondere bei gefalteten Scheiben innerhalb der Portion oder auch die Form der Portion, beispielsweise die Relativlage der einzelnen Scheiben zueinander hinsichtlich Versatz in Längs- oder Querrichtung. Auch die Position des Verpackungselementes zu wenigstens einem ortsfeste, Referenzpunkt kann Teil der Portions-Anordnung sein.

Die Soll-Anordnung beschreibt für jeden einzelnen dieser Anordnungs-Parameter den Idealzustand in Form eines Soll-Anordnungswertes, und ein zugehöriger Toleranzbereich - der sich einseitig oder beidseits des Idealwertes der Soll-Anordnung erstrecken kann - den Bereich, in dem die Ist-Anordnung der Portion noch als tolerabel hingenommen wird und keine Veränderung eines, insbesondere des diesen Messwert beeinflussenden, Gestehungs-Parameters erfolgt.

Ferner soll klargestellt sein, dass unter den Gestehungs-Parametern der vorgelagerten Einheiten sämtliche an dieser Einheit steuerbaren Parameter dieser Einheiten verstanden werden, die einen Einfluss auf die Portions-Anordnung haben, also beispielsweise Messer-Drehzahl, Schneidspalt, Geschwindigkeit des Portionier-Bandes oder eines der anderen Bänder bei einem getakteten Betrieb die Stillstandszeit zwischen den einzelnen Schritt-Bewegungen, das Geschwindigkeits-Zeit-Diagramm dieser Bewegungen, die Absolut-Position eines der Bänder in Längs- oder in Querrichtung zu einem Referenz-Zeitpunkt oder bei einem Referenz-Zustand.

Hinsichtlich des Verfahrens zum automatischen Erreichen einer vorgegebenen Portions-Anordnung einer auf einem Verpackungs-Element - beispielsweise in einer Verpackungs-Mulde eines Mulden-Bandes - abgelegten Portion, insbesondere einer geschindelten Portion aus mehreren Scheiben, wird die bestehende Aufgabe dadurch gelöst, dass
- zunächst im abgelegten Zustand der Portion der Ist-Zustand der Portions-Anordnung, also die Ist-Anordnung ermittelt wird,
- diese ist-Anordnung hinsichtlich ihrer relevanten Anordnungswerte mit der vorgegebenen Soll-Anordnung, also den im Rahmen der Soll-Anordnung vorgegebenen Soll-Anordnungswerten, vergleichen wird,
- bei festgestellter Abweichung der Ist-Anordnung von der Soll-Anordnung bei mindestens einem Anordnungswert um mehr als den bei diesem Soll-Anordnungswert zusätzlich vorgegebenen Toleranzwert hinaus, also einer Ist-Anordnung außerhalb des Toleranzbereiches der Soll-Anordnung,
- wird mindestens einer der Gestehungs-Parameter der vorgelagerten Einheiten automatisch so verändert, dass eine mit diesem veränderten Gestehungs-Parameter erzeugte und auf dem Verpackungs-Element abgelegte Portion eine Ist-Anordnung aufweist, die von der Soll-Anordnung um nicht mehr als die vorgegebenen Toleranzwerte abweicht, also innerhalb des Toleranzbereichs um den Soll-Anordnungswert liegt.

Dadurch kann im abgelegten Zustand die gewünschte Soll-Anordnung der Portion relativ zum Verpackungs-Element erreicht werden, da alle möglicherweise negativen Einflussfaktoren auf die Portions-Anordnung zwischen dem Ort und Zeitpunkt der Gestehungs-Parameter sowie dem Zustand, in dem die Ist-Anordnung ermittelt wird, liegen.

Hierzu ist zwar eine Rückkopplung von dem Ort der Ermittlung der Ist-Anordnung, nämlich bereits in der Verpackungs-Maschine, und dem Ort an dem die Gestehungs-Parameter für diese Ist-Anordnung auf die Portion einwirken, in datentechnischer Hinsicht notwendig, sodass hierfür die Steuerung der Verpackungs-Maschine mit derjenigen Steuerung, die den entsprechenden Gestehungs-Parameter steuert, datentechnisch verbunden sein muss und die Anweisung hinsichtlich der Veränderung hinsichtlich Qualität und Quantität eines definierten Gestehungs-Parameters auch an diese Steuerung meldet.

Die vorgelagerten Einheiten, in denen die Gestehungs-Parameter vorliegen und auf die Portion einwirken, kann entweder die Verpackungs-Anlieferungseinheit sein, also die Einheit, die beispielsweise das Mulden-Band herantransportiert, oder die Portions-Anlieferungseinheit, also diejenige Einheit, meist bestehend aus einem oder mehreren hintereinander angeordneten Band-Förderern, die die bereits erzeugte Portion an die Verpackungs-Maschine liefert.

Diese vorgelagerte Einheit kann jedoch auch die Portions-Erzeugungseinheit sein, die die Portion erst erzeugt. Bei einem üblichen Slicer ist dies die Schneideinheit, die das Messer antreibt, welches die einzelnen Scheiben vom Kaliber abtrennt zusammen mit dem Portionier-Band der Abförder-Einheit, die in aller Regel Bestandteil des Slicers ist, denn im Zusammenspiel zwischen der Funktion des Portionier-Bandes und der Schneideinheit wird die Portion erzeugt.

In aller Regel wird die Ermittlung der Ist-Anordnung der Portion auf dem Verpackungs-Element berührungslos durchgeführt, also beispielsweise mit optischen Mitteln wie etwa einer Kamera oder einem anderen berührungslos arbeitenden Sensor, um jede mechanische Einflussnahme auf die Portion zu vermeiden.

In der Regel wird die Ist-Anordnung bei stillstehendem Verpackungs-Element ermittelt, und vorzugsweise möglichst unmittelbar nach dem Ablegen der Portion auf oder in dem Verpackungs-Element. Dies bedeutet, möglichst unmittelbar nach Anhalten des Verpackungs-Elementes, denn in der Regel wird das Ablegen - welches ein Abwerfen von dem letzten Förderer der Portions-Anlieferungseinheit ist - auf das Verpackungs-Element bei in Transportrichtung laufendem Verpackungs-Element durchgeführt, um die Differenz-Geschwindigkeit zwischen der abgeworfenen Portion und der dem Verpackungs-Element, auf dem sie auftrifft im Auftreff-Zeitpunkt möglichst niedrig, vorzugsweise bei Null, zu haben und dadurch ein Verrutschen der Portion auf dem Verpackungs-Element beim Auftreffen zu vermeiden.

Abweichungen der Soll-Anordnung von der Ist-Anordnung können auch durch zufällig und einmalig oder selten auftretende Faktoren bedingt sein, beispielsweise eine zu geringe Haftreibung auf nur einem oder einigen wenigen der Verpackungs-Elemente.

Es ist nicht das Ziel der vorliegenden Anmeldung solche zufällig oder einmalig oder selten auftretenden Abweichungen der Ist-Anordnung von der Soll-Anordnung der Portion zu beseitigen, zumal dies in der Regel auch nicht möglich ist, da der verursachende Grund hierfür oft nicht bekannt und ermittelbar ist. Stattdessen sollen Systemfehler beseitigt werden, die eine sich wiederholende Abweichung der Ist-Anordnung von der Soll-Anordnung bewirken.

Deshalb werden die Gestehungs-Parameter - auch wenn die Ist-Anordnung außerhalb der Toleranzbereiche des wenigstens einen Toleranzbereichs der Soll-Anordnung liegt - vorzugsweise nur dann verändert, wenn die festgestellte Abweichung als sich wiederholender Fehler ermittelt wurde.

Die bedeutet beispielsweise, dass die festgestellte Abweichung mindestens 3-mal, insbesondere mindestens 5-mal, insbesondere mindestens 7-mal unmittelbar hintereinander, also ohne korrekte Ist-Anordnung dazwischen, festgestellt wurde, oder mindestens 6-mal, besser mindestens 8-mal innerhalb von zehn aufeinander folgenden Ermittlungsvorgängen festgestellt wurde.

Wie groß die festgestellte Abweichung dabei im Einzelnen konkret ist, ist unerheblich, sofern es sich dabei jeweils um eine unzulässig hohe Abweichung, also über den Toleranzwert hinaus, handelt.

Die vorgegebene Soll-Anordnung kann durch diverse Anordnungswerte sowie den jeweils zugehörigen Toleranzwerten, als dem jeweils zugehörigen Toleranzbereich definiert werden, wobei die Ist-Anordnung nur dann korrekt ist, wenn sie alle Anordnungswerte einhält, also innerhalb aller Toleranzbereiche liegt.

Eine besonders nachteilige Ist-Anordnung der Portion besteht darin, wenn diese bei Anordnung in einer Verpackungs-Mulde teilweise auf dem Rand, der die Mulde umgibt, aufliegt, der üblicherweise als Siegelrand zum Aufsiegeln einer Siegelfolie benutzt wird, sodass ein dort aufliegender z.B. Rand einer Portion das dichte Aufsiegeln der Siegelfolie verhindert und damit die entsprechende Packung undicht bliebe.

Auch bei einem plattenförmigen Verpackungs-Element kann Ähnliches geschehen, wenn die Portion über den Rand des Verpackungs-Elementes vorsteht und dadurch das Umlegen der darüber gelegten und auf der Rückseite des Verpackungs-Elementes in der Regel dicht fixierte Anbringen einer Siegelfolie verhindert. In Längsrichtung, also der Transportrichtung, ist die Gefahr eines Aufliegens der Portion auf dem die Mulde umgebenden Siegelrand naturgemäß größer als in Querrichtung.

Die Soll-Anordnung umfasst als Anordnungs-Parameter deshalb einen positiven Soll-Anfangs-Abstand sowie einen positiven Soll-End-Abstand in Längsrichtung - der Transportrichtung der heran transportierten Portionen - zwischen der Portion und dem Anfang einerseits und dem Ende des Verpackungs-Elements, insbesondere dem Anfang bzw. Ende der Mulde und der Portion andererseits.

Wird dieser positive Abstand um mehr als den mit hinterlegten Toleranzwert - der insbesondere maximal diesem positiven Abstand entspricht - überschritten oder es liegt gar ein negativer Ist-Anfangs-Abstand, also ein Hinausragen der Portion in Längsrichtung, insbesondere über den Rand der Mulde nach vorne oder hinten, so wird der diese Lage bestimmende mindestens eine Gestehungs-Parameter verändert in Richtung Erreichen eines positiven Soll-Anfangs-Abstandes innerhalb des Toleranzbereiches.

So kann beispielsweise die Anlieferungs-Geschwindigkeit der vorgelagerten Portions-Anlieferungseinheit reduziert werden, um die Abwurf-Geschwindigkeit der Portion in Richtung Verpackungs-Element zu reduzieren oder es kann umgekehrt die Anlieferungs-Geschwindigkeit der vorgelagerten Verpackungs-Anlieferungseinheit, mit der das Verpackungs-Element zum Zeitpunkt des Auftreffens der Portion auf ihn bewegt erhöht werden, wenn der vordere Ist-Anfangs-Abstand positiv aber zu klein war oder gar negativ war. Bei einem zu geringen oder gar negativen Ist-End-Abstand wird umgekehrt vorgegangen.

Die Veränderung wird - ggfs. schrittweise mit dazwischen immer stattfindender Ermittlung der Ist-Portions-Anordnung- so stark verändert, dass ein zulässiger positiver Soll-Anfangs-Abstand erreicht wird.

Die Soll-Anordnung kann auch einen rechten und linken Soll-Querabstand vorgeben.

Ist der Ist-Querabstand nach links oder rechts zu gering, so wird als Gestehungs-Parameter beispielsweise der Querversatz eines auf das Portionier-Band folgenden Förderbandes oder die Querpositionierung des Portionier-Bandes selbst im Zeitpunkt des Auftreffens der Scheibe so verändert, dass die Portion in einer solchen Querposition auf dem Verpackungs-Element ankommt, die innerhalb des vorgesehenen Toleranzbereiches liegt.

Die Portion soll nicht nur vollständig innerhalb der Abmessungen des Verpackungs-Elements, insbesondere der Mulde, liegen, sondern darüber hinaus auch optisch ansprechende innerhalb dessen liegen, also möglichst zentrisch darauf oder darin liegen.

Hierfür können im Rahmen der Soll-Anordnung ebenfalls positive Soll-Abstände von vorne, hinten oder den beiden Seiten des Verpackungs-Elements, insbesondere der Mulde, vorgegeben werden, wie zum Vermeiden eines Aufliegens der Portion auf dem über das Verpackungs-Element, insbesondere die Mulde hinaus, jedoch werden dann die Toleranzwerte und der dadurch definierte Toleranzbereich bzgl. des jeweiligen Soll-Abstandes wesentlich enger festgelegt, und zwar so eng, dass bei einem innerhalb des jeweiligen vorderen hinteren oder seitlichen Toleranzbereichs endenden Portion diese vom Verbraucher als zentrische Lage wahrgenommen wird.

Welcher Gestehungs-Parameter in welche Richtung verändert werden kann, um eine unzulässige Ist-Anordnung bei nachfolgenden Portionen so zu verändern, dass die Soll-Anordnung erreicht wird, entspricht den zuvor beschriebenen Maßnahmen.

Ferner soll die Portions-Anordnung auch ein optisch ansprechendes Bild innerhalb der Portion abgeben:
So sollen beispielsweise die Abstände in Längsrichtung der geschindelten Portion innerhalb der Portion alle in etwa gleich groß sein.

Dann ist im Rahmen der Soll-Anordnung auch ein Soll-Scheiben-Abstand vorgegeben, der in Längsrichtung den Abstand zwischen zwei Scheiben, beispielsweise dem jeweils vorderen Ende der Scheibe, die ja in der Regel alle gleich groß sind, sowie ein zugehöriger positiver und negativer Toleranzwert.

Falls an einer Stelle der Portion der Ist-Längs-Abstand außerhalb des hierfür vorgesehenen Toleranzbereiches liegt, beispielsweise zu klein ist, wird als Gestehungs-Parameter die Vorschub-Geschwindigkeit und/oder Vorschub-Strecke des Portionier-Bandes zwischen dem Auftreffen dieser beiden Scheiben der Portion erhöht, im umgekehrten Fall reduziert, sodass nach Veränderung dieses Gestehungs-Parameters der Ist-Längs-Abstand dem Soll-Längs-Abstand entspricht, also innerhalb dessen Toleranzbereiches liegt.

Unabhängig von den Abständen innerhalb der Portion und unabhängig von einer möglicherweise durchaus gegebenen zentrischen Lage der Portion innerhalb des Verpackungs-Elementes kann die Portionslänge zu groß oder zu klein sein. Um dies zu vermeiden, kann die Soll-Anordnung als Anordnungs-Parameter die Soll-Länge der Portion in Längsrichtung aufweisen einschließlich eines positiven und negativen Toleranzwertes, also eines Toleranzbereiches.

Falls die Ist-Länge der Portion als außerhalb des entsprechenden Toleranzbereiches liegend ermittelt wird, wird der entsprechende Gestehungs-Parameter verändert, beispielsweise die Vorschub-Geschwindigkeit oder Vorschub-Strecke des Portionier-Bandes zwischen dem Auftreffen zweier aufeinanderfolgender Scheiben der Portion reduziert, wenn die Ist-Länge größer als die größte tolerierte Soll-Länge war und umgekehrt.

Auch diese Veränderung erfolgt in einem solchen Maß, dass die nachfolgenden Portionen die Ist-Länge der Soll-Länge entsprechen, was immer bedeuten soll, dass die Ist-Größe innerhalb des Toleranzbereiches der Soll-Größe liegt.

Für eine optisch ansprechende, insbesondere einreihige, geschindelte Portion ist auch der Querversatz zwischen den Scheiben, insbesondere zwei in Längsrichtung aufeinanderfolgenden Scheiben einer Portion von Belang.

Hierfür kann die vorgegebene Soll-Anordnung einen maximal zulässigen Soll-Querversatz einschließlich eines entsprechenden Toleranzwertes, enthalten, ggfs. getrennt für zwei aufeinanderfolgende Scheiben oder für den Gesamt-Querversatz zwischen der am weitesten links und der am weitesten rechts liegenden Scheibe einer einreihigen geschindelten Portion.

Falls der Ist-Querversatz größer ist als der maximal zulässige Soll-Querversatz, also außerhalb dessen Toleranzbereichs liegt, wird der entsprechende Gestehungs-Parameter der einen oder der mehreren vorgelagerten Portions-Erzeugungseinheit so verändert, dass mit dem veränderten Gestehungs-Parameter der Ist-Querversatz innerhalb des Toleranzbereiches des Soll-Querversatzes liegt.

Abhängig von der Konstruktion der Portions-Erzeugungseinheit können dies unterschiedliche Gestehungs-Parameter sein, beispielsweise die Größe eines Querversatzes, um den das Portionier-Band zwischen dem Auftreffen zweier Scheiben in Querrichtung verfahren wird, um trotz unterschiedlicher Auftreff-Positionen der einzelnen Scheiben in Querrichtung diese möglichst auf der gleichen Querposition des Portionier-Bandes in Längsrichtung versetzt abzulegen.

Sofern die Soll-Anordnung einen maximal zulässigen Soll-Querabstand zwischen der am weitesten links und der am weitesten rechts liegenden Scheibe aufweist, also eine Soll-Querbreite, vorgibt, kann es genügen, durch das Verändern des Gestehungs-Parameters lediglich die am weitesten links und/oder die am weitesten rechts liegende Scheibe weiter in Richtung Längsmitte der Portion bei nachfolgenden Portionen abzulegen, um die maximale Soll-Querbreite und deren Toleranzbereich oder vorgegebenen Soll-Querabstand zum Rand des Verpackungselementes, insbesondere der Mulde, nicht zu überschreiten.

Der dafür zu steuernde wenigstens eine Gestehungs-Parameter ist der gleiche wie zuvor beschrieben.

Für die korrekte Anordnung der Portion auf dem Verpackungs-Element kommt es nicht nur auf die richtige Auftreffstelle beim Abwerfen der Portion in Richtung Verpackungs-Element an, sondern auch darauf, dass sich dann das Verpackungs-Element, insbesondere die Mulde eines Mulden-Bandes, an der korrekten Auffangstelle, also einem gewählten Referenzunkt der Umgebung des Verpackungs-Elementes, in Längsrichtung und Querrichtung befindet.

Zu diesem Zweck kann die vorgegebene Soll-Anordnung einen Soll-Verpackungs-Längsabstand, insbesondere einen Soll-Mulden-Längsabstand, in Längsrichtung umfassen, zu dem zum Zeitpunkt des Beginns des Ablegens der Abstand zwischen einem Punkt der Verpackung, insbesondere dem Rand der Mulde, etwa dem Anfang der Verpackung, und dem Referenzpunkt, betragen soll. Dieser Soll-Verpackungs-Längsabstand kann auch Null betragen, wenn der Referenzpunkt der Umgebung zu Beginn des Ablegens oder zum Ermittlungs-zeitpunkt der Ist-Anordnung mit dem gewählten Referenzpunkt der Verpackung übereinstimmen soll.

Da im Zeitpunkt des Abwurfs der Portion das Muldenband selbst relativ schnell bewegt wird, kann die Ermittlung von deren Position im bewegten Zustand schwierig sein. Da nach jedem Abwurf das Muldenband angehalten wird, und die Laufzeit dazwischen in der Regel gleich bleibt, kann die Ermittlung der Ist-Position der Mulde auch im stillstehenden Zustand erfolgen.

Zusätzlich ist auch hier wenigstens ein Toleranzwert, etwa ein positiver und ein negativer Toleranzwert, und damit ein Toleranzbereich festgelegt.

Wenn das Verpackungs-Element bei der Ist-Anordnung in Transortrichtung, der Längsrichtung, der Verpackung hinter dem Referenzpunkt liegt, also der Soll-Verpackungs-Längsabstand größer ist als der Ist-Verpackungs-Längsabstand wird vorzugsweise als Gestehungs-Parameter der vorgelagerten Verpackungs-Anlieferungseinheit deren Anlieferungs-Geschwindigkeit, zumindest zeitweise, so erhöht, dass danach der Ist-Verpackungs-Längsabstand innerhalb des Toleranzbereiches um den Soll-Verpackungs-Längsabstand liegt. Bei einem zu kleinen Ist-Verpackungs-Längsabstand wird umgekehrt vorgegangen.

Bei Portionen, die gefaltete Scheiben enthalten, kann es vorkommen, dass die auf dem Verpackungs-Element abgelegte Portion eine zu große Höhe aufweist, also insbesondere bei in einer Mulde abgelegten Portion diese über den Rand der Mulde nach oben aufragt.

Da dies bewirkt, dass eine darüber gelegte und auf den Rand um die Mulde aufgesiegelte Siegelfolie nicht eben aufgelegt werden kann, sondern nach oben ausbeult - was entweder zu einem dichten Aufsiegeln der Siegelfolie um die Mulde herumführt und/oder vom Verbraucher als aufgeblähte Verpackung und damit verdorbenem Inhalt interpretiert wird, kann die vorgegebene Soll-Anordnung einen positiven Soll-Höhenabstand in vertikaler Richtung zwischen dem oberen Ende der Portion und dem oberen Rand der Mulde umfassen, sowie einen Toleranzwert hierfür.

Falls die Ist-Anordnung ein oberes Ende der Portion aufweist, welches über den oberen Rand der Mulde nach oben vorsteht, also einen negativen Ist-Höhenabstand aufweist, wird der für die Höhe der Portion relevante Gestehungs-Parameter der vorgelagerten Portions-Erzeugungseinheit und/oder Portions-Anlieferungseinheit entsprechend verändert, beispielsweise die Drehzahl einer rotierenden Faltstange und/oder die Menge und Geschwindigkeit der aus den Luftaustrittsöffnungen einer hohlen Faltstange austretenden Luftströmung positiv oder negativ in einem solchen Maß verändert, dass mit dem veränderten Gestehungs-Parameter kein negativer Ist-Höhenabstand der nächsten Portion mehr vorliegt, also die diesbezügliche Ist-Anordnung der Portion der Soll-Anordnung entspricht, indem sie in dem entsprechenden Toleranzbereich liegt.

Generell soll erwähnt werden, dass ein Toleranzwert zu einem entsprechenden Ablage-Parameter
- entweder vom Soll-Wert aus nur ein in die positiver oder nur in die negative Richtung weisender Toleranzwert sein kann
- der Toleranzwert als absoluter Wert oder als relativer, z.B. prozentualer Wert, relativ zum Soll-Wert festgelegt werden kann.

Zum automatischen Steuern der Verpackung-Vorrichtung, insbesondere der Aufschneide-Maschine - falls eine solche der Verpackungs-Maschine vorgeschaltet ist - gehört
- das Steuern der Geschwindigkeit des kontinuierlich oder schrittweise laufenden Portionier-Bandes sowie dessen Stillstands-Intervalle
   und/oder
- das Steuern der Schrittlänge des schrittweise laufenden Portionier-Bandes
   und/oder
- das Steuern des zeitlichen Abstandes zwischen den einzelnen Abtrennvorgängen
   und/oder
- die Drehzahl des Messers (3)
   und/oder
- die Geschwindigkeit und/oder Strecke des Querversatzes eines Querversatz-Bandes
   und/oder
- die Vorschubkraft der oberen und/oder unteren Produktführung (8, 9) und/oder
- Laufgeschwindigkeit und/oder Querposition des Muldenbandes (22), insbesondere zum Zeitpunkt des Portions-Abwurfes
   und/oder
- Laufgeschwindigkeit des Einlegers (21), insbesondere zum Zeitpunkt des Portions-Abwurfes.

Hinsichtlich einer Verpackungs-Vorrichtung, welche umfasst
- eine Verpackungs-Maschine, insbesondere mit einer Tiefzieh-Station für die Herstellung der Mulden in einer Unterfolie
   und/oder einen Tray-Sealer zum Verpacken einer auf einem Verpackungs-Element, insbesondere in einer Schale abgelegten, insbesondere geschindelten, Portion aus Scheiben, und
- eine Portions-Anlieferungseinheit, welche die Portionen zur Verpackungs-Maschine anliefert, und
- eine Portions-Erzeugungseinheit, welche die Portionen erzeugt, insbesondere ein Slicer, mit einer Schneideinheit und einem in Relation dazu gesteuert antreibbaren Portionier-Band, und
- eine Verpackungs-Anlieferungseinheit, welche die Verpackungs-Elemente zur Verpackungs-Maschine anliefert,
wird die bestehende Aufgabe dadurch gelöst, dass die Verpackungs-Maschine mindestens einen Sensor aufweist zum Ermitteln der Portions-Anordnung nach deren Ablegen relativ zum Verpackungs-Element auf dem sie liegt, insbesondere in der Verpackungs-Mulde.

Dabei ist der Sensor datentechnisch mit der Steuerung der Verpackungs-Maschine verbunden und diese Steuerung ist so ausgebildet, dass sie die Gestehungs-Parameters; die Einfluss auf die Portions-Anordnung haben, auch bei der der Verpackungs-Maschine vorgelagerten und insbesondere eine separate Maschine mit separater Steuerung darstellenden Portions-Erzeugungseinheit und/oder Portions-Anlieferungseinheit und/oder Verpackungs-Anlieferungseinheit steuern kann.

Insbesondere ist die Verpackungs-Vorrichtung, insbesondere deren Steuerung, dazu ausgebildet, das zuvor beschriebene Verfahren durchzuführen.

Dadurch kann eine Ist-Anordnung der Portion auf oder in dem Verpackungs-Element erreicht werden, die einer vorgegebenen Soll-Anordnung der Portion entspricht.

In aller Regel wird die Verpackungs-Maschine eine eigene Steuerung hierfür besitzen, die in datentechnischer Verbindung mit den Steuerungen der vorgelagerten Einheiten steht. Nur selten wird es eine alle diese Maschinen und Einheiten übergreifende zentrale Steuerung geben, was aber nicht ausgeschlossen ist.

Die Abförder-Einheit für die erzeugten Portionen, insbesondere deren schrittweise ansteuerbares Portionier-Band, ist Teil der Portions-Erzeugungseinheit, die in aller Regel aber auch zumindest die Schneideinheit der vorgelagerten Aufschneide-Maschine umfasst.

Die Abförder-Einheit, insbesondere einschließlich deren Portionier-Bandes, ist in aller Regel Bestandteil der Aufschneide-Maschine und wird von der gleichen Steuerung gesteuert, kann aber auch eine davon separate Einheit mit eigener Steuerung sein, die dann in datentechnischer Verbindung und im Datenaustausch mit den Steuerungen der anderen Einheiten und Maschinen steht. Vorzugsweise ist die Portions-Anlieferungseinheit funktional, insbesondere auch räumlich, zwischen der Portions-Erzeugungseinheit, insbesondere deren Portionier-Band, und der Verpackungs-Maschine angeordnet.

### c) Ausführungsbeispiele

Ausführungsformen gemäß der Erfindung sind im Folgenden beispielhaft näher beschrieben. Es zeigen:
- **Figur 1a:**: eine Verpackungs-Vorrichtung bestehend aus einem Slicer sowie einem in der Längsrichtung, der Durchlaufrichtung durch die Vorrichtung, nachgeordneten Verpackungs-Maschine mit einem Einleger, betrachtet in der Seitenansicht, der BreitenRichtung der Verpackungs-Vorrichtung,
- **Figur 2a:**: in der Aufsicht von oben den Bereich des Einlegers sowie des stromabwärtigen Teils des Mulden-Bandes mit dem in diesen Teil des Mulden-Bandes in die Mulden bereits eingelegten Portionen,

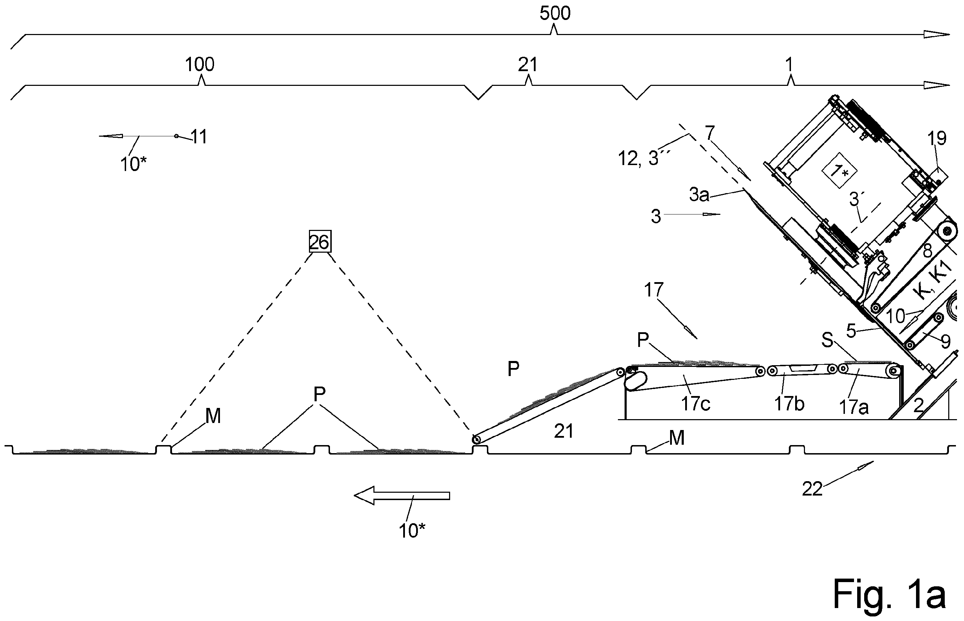

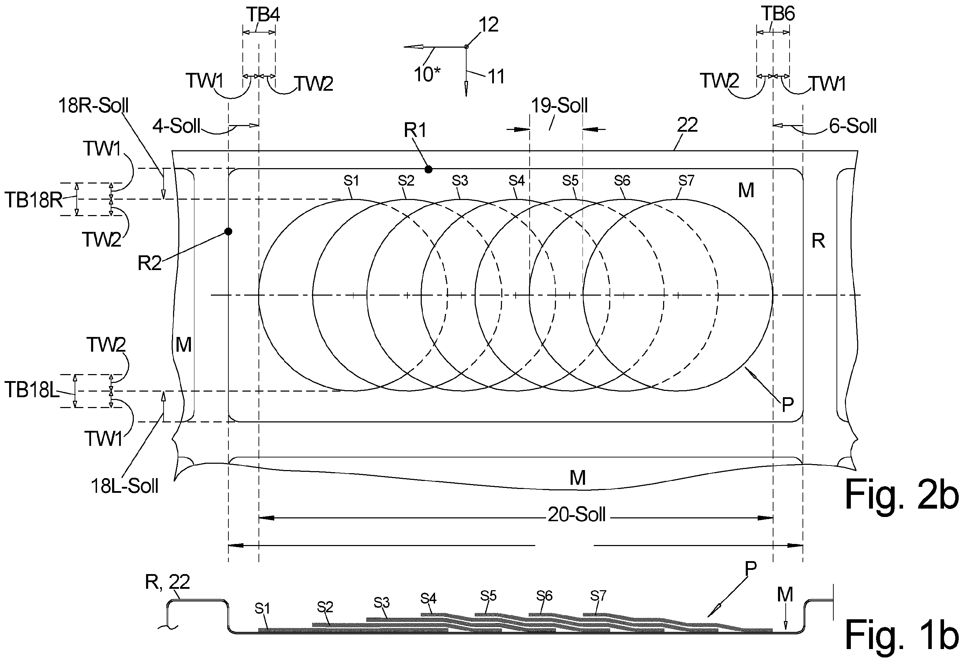

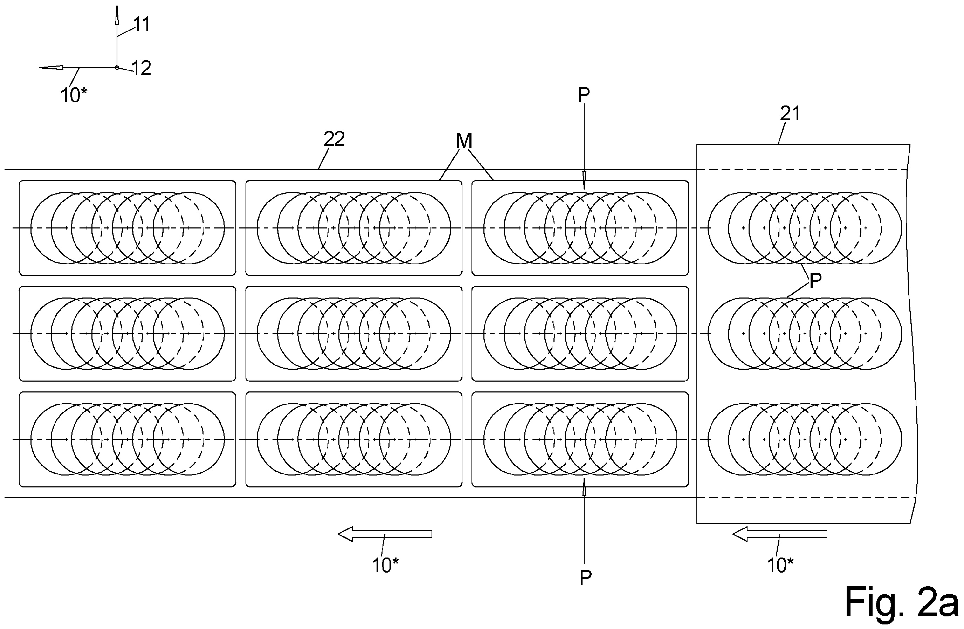

- **Figur 1b, 2b:**: eine einzelne befüllte Mulde in der Seitenansicht sowie der Aufsicht von oben als Vergrößerungen aus **Figur 1a** **bzw. 2a** wobei sich die Scheiben der Portion in Ideal-Lage in der Mulde M befinden, also in der Soll-Anordnung,

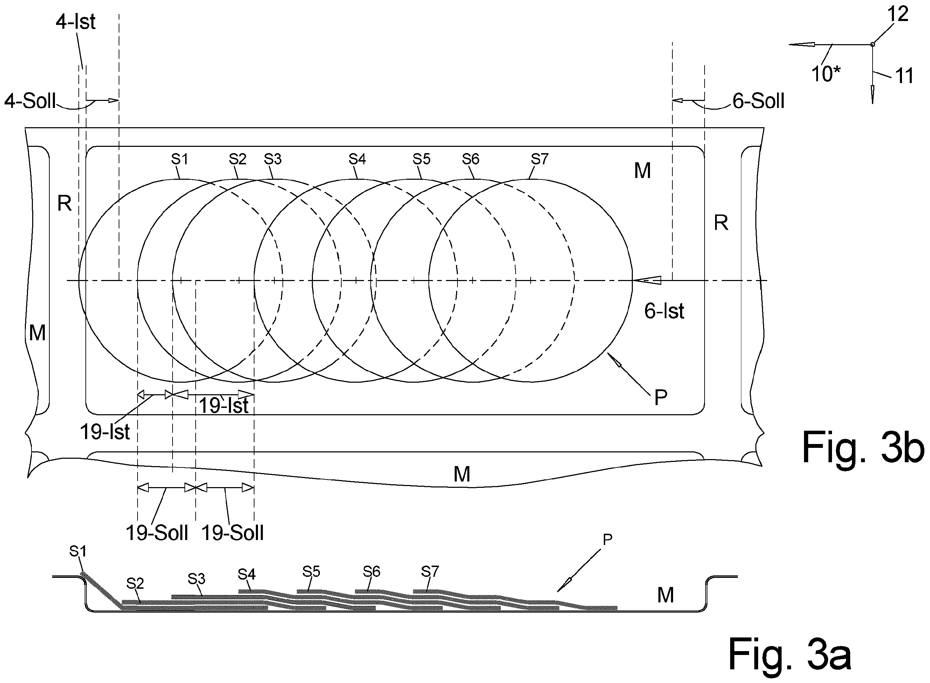

- **Figur 3a, b:**: die gleichen Ansichten wie in **Figur 2a****,** **b****,** jedoch mit der Portion zu weit vorne in der Mulde und teilweise auf dem Rand der Mulde aufliegend,

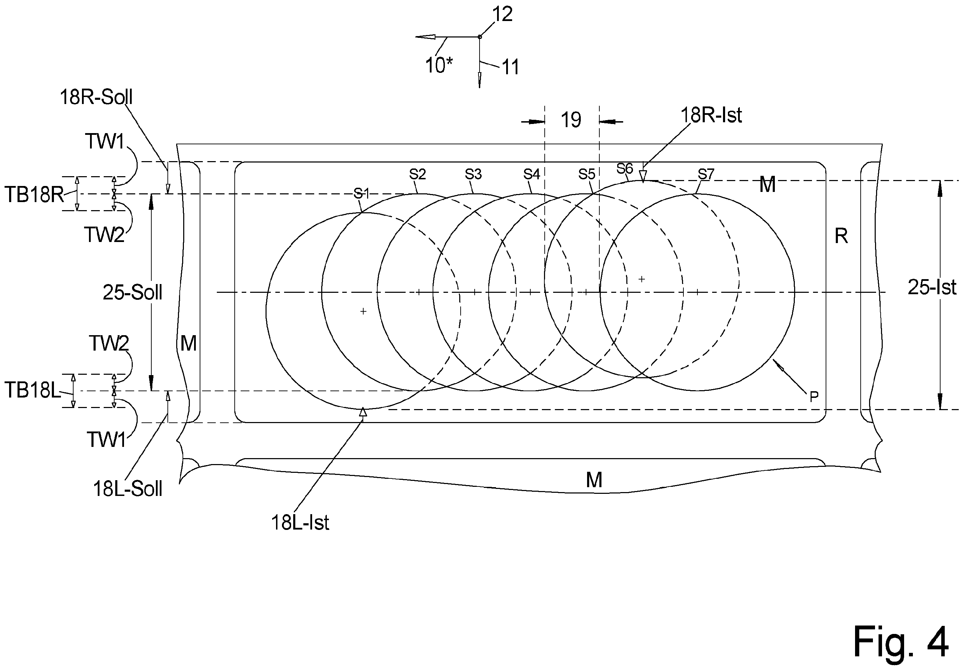

- **Figur 4:**: die gleiche Ansicht wie in **Figur 2b****,** jedoch innerhalb der Portion mit Querversatz einzelner Scheiben,

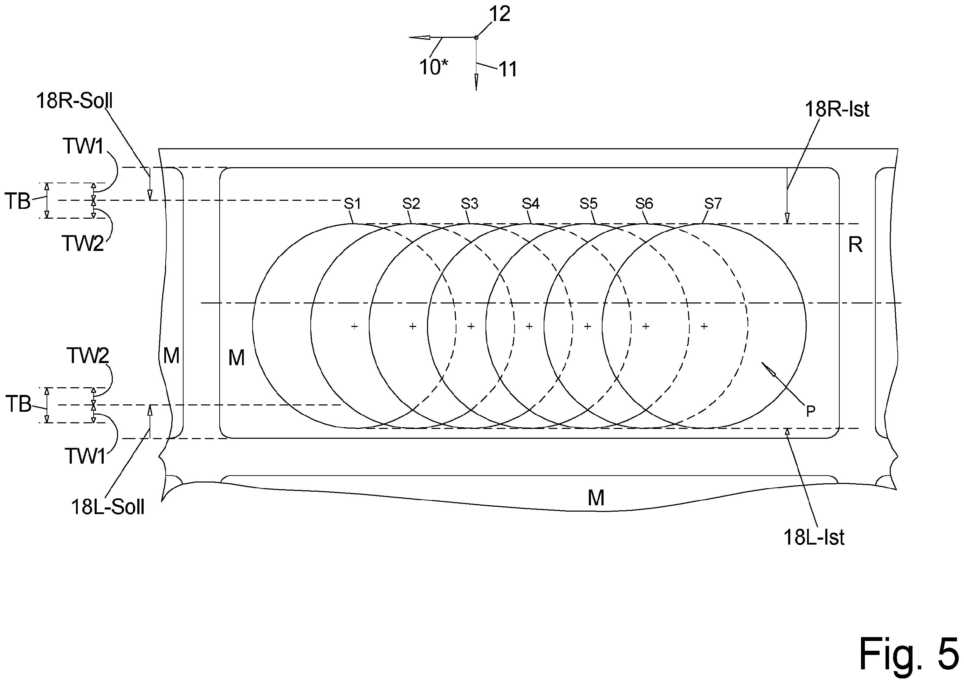

- **Figur 5:**: die gleiche Ansicht wie in **Figur 2b****,** jedoch die gesamte Portion mit Querversatz in der Mulde M,

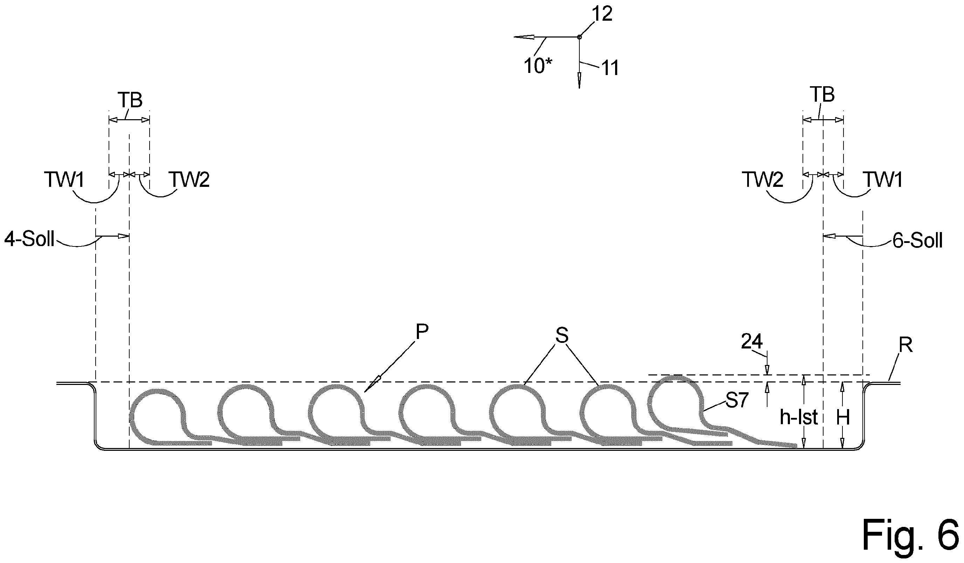

- **Figur 6:**: die gleiche Ansicht wie **Figur 1b****,** jedoch mit einer Portion aus gefalteten Scheiben in der Mulde,

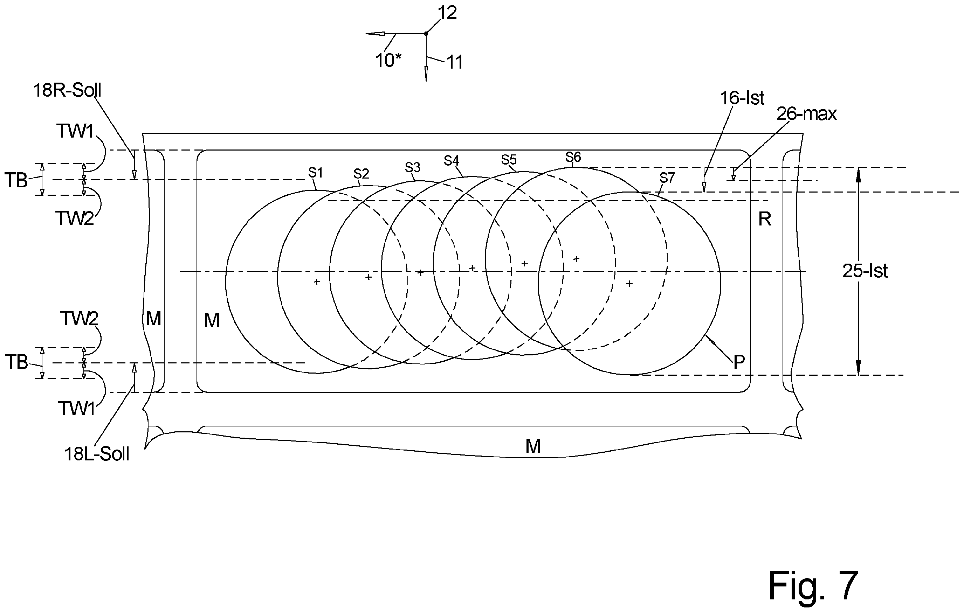

- **Figur 7:**: die gleiche Ansicht wie **Figur 5****,** jedoch mit unterschiedlichen Quer-Positionen der einzelnen Scheiben innerhalb der Portion.

**Figur 1a** zeigt in der Seitenansicht eine Verpackungs-Vorrichtung 500 mit - in Durchlaufrichtung 10* durch die gesamte Einheit - einem Slicer 1, einem Einleger 21 sowie einer Verpackungs-Maschine 100.

Von dem nur teilweise dargestellten Slicer 1 ist die Schneideinheit 7 sichtbar, sowie von der Zuführung für die Kaliber K die obere Produktführung 8 und die untere Produktführung 9, zwischen denen die Kaliber K gehalten werden und in einer Zufuhrrichtung 10, die in einem Winkel zur horizontalen Durchlaufrichtung 10* durch die gesamte Vorrichtung steht, der Schneideinheit 7 zugeführt werden.

Das Messer 3, dessen scharf geschliffene Schneidkante 3a die Schneidebene 3" definiert, liegt in sehr geringem Abstand parallel zur Unterseite der platten-förmigen Schneidbrille 5, in der für die meist mehreren in Blickrichtung der **Figur 1a** hintereinander befindlichen und gleichzeitig aufgeschnittenen Kaliber K1, K2 ... jeweils eine hier nicht sichtbare Brillen-Öffnung vorhanden ist, durch die die Kaliber K sehr genau hindurchpassen, sodass die Umfangskante der Schneidbrille 5 und deren Brillen-Öffnungen die feststehende Gegenschneide zur Schneidkante 3a des Messers 3 bilden.

An dem Grundgestell 2 des Slicers 1 ist nicht nur die Schneideinheit 7 und die Zuführung für die Kaliber K befestigt, sondern in der Regel auch eine Abförder-Einheit 17, die aus drei in Durchlaufrichtung 10* hintereinander befindlichen Abförderern 17a, b, c besteht, wovon der erste, dass Portionier-Band 17a, vielfältig verschwenkbar ist in seiner Schrägstellung um eine in Blickrichtung der **Figur 1a** verlaufende Schwenkachse, sodass gesteuert werden kann, mit welchem Auftreffwinkel und mit welcher Flugbahn und Abstand die vom Kaliber K abgetrennten Scheiben S auf dem Portionier-Band 17a auftreffen. Indem das Portionier-Band 17a gesteuert schrittweise antreibbar ist, können darauf z.B. geschindelte Portionen P erzeugt werden.

Unter dem Slicer 1 wird ein Mulden-Band 22, ebenfalls von rechts nach links in der Durchlaufrichtung 10*, zugeführt, in deren Mulden M je eine Portion P abgelegt werden soll.

Um den Höhenversatz zwischen dem Mulden-Band 22 und der in der Regel horizontal höher liegenden Abförder-Einheit 17 auszugleichen, schließt sich an den letzten Abförderer 17c der Abförder-Einheit 17 ein sogenannter Einleger 21 an. Dabei handelt es sich ebenfalls um ein Förder-Band, welches in Durchlaufrichtung 10* verläuft. aber schräg nach unten gerichtet ist und knapp über dem Mulden-Band 22 endet.

Zum Ablegen einer Portion P werden der Einleger 21 und das Mulden-Band 22 gleich schnell angetrieben, um zu vermeiden, dass es beim Ablegen, besser Abwerfen, der Portionen P zu einem Falten der Portionen P in der Mulde M kommt. Zwischen dem Einlegen der einzelnen Portionen P können das Mulden-Band 22 und/oder der Einleger 21 jeweils angehalten werden.

Auf den Bereich stromabwärts, insbesondere unmittelbar stromabwärts, des Einlegers 21 ist eine über dem Mulden-Band 22 befestigte Kamera K gerichtet, mit deren Hilfe die Ist-Anordnung der Portionen P in den Mulden M ermittelt werden kann, sowohl quantitativ als auch qualitativ, also bereits direkt in der Verpackungs-Maschine 100.

**Figur 2a** zeigt die Situation in der Aufsicht von oben mit dem vorderen Endbereich des Einliegers 21 und dem darunter hervorlaufenden Mulden-Band 22, in dessen sichtbaren Mulden M bereits jeweils eine Portion P in je einer Mulde M abgelegt ist.

**Figur 1b, 2b** zeigen die Situation in Seitenansicht und Aufsicht für nur eine einzige Mulde M mit einer einzigen darin liegenden Portion P bestehend aus in diesem Fall sieben Scheiben S1 bis S7.

**Figur 2b** zeigt in der Aufsicht die Soll-Anordnung der abgelegten Portion P in der Mulde M, mit entsprechenden in der Steuerung hinterlegten Soll-Anordnungswerten. Im Einzelnen:
- In Querrichtung 11 soll die Portion P zentrisch zu den beiderseitigen Rändern R der Mulde M liegen mit einem mit Blick in Durchlaufrichtung 10* linken Soll-Querabstand 18L-Soll sowie rechten Soll-Querabstand 18R-Soll, jeweils gemessen vom seitlichen Mulden-Rand bis zur Portion P hin. Dabei liegt jeder dieser beiden Soll-Anordnungswerte in einem Toleranzbereich TB, der sich vom Sollwert in Richtung Mulden-Mitte um einen Toleranzwert TW2 erstreckt und in Richtung seitlichen Mulden-Rand um einen Toleranzwert TW1.
- In Längsrichtung 10 soll die Portion P zentrisch zu dem vorderen und hinteren Rand R der Mulde M liegen mit einem mit in Längsrichtung 10 gemessenen, in Durchlaufrichtung 10* vorderen Soll-Anfangsabstand 4-Soll sowie hinteren Soll-Endabstand 6-Soll, jeweils gemessen vom vorderen oder hinteren Mulden-Rand bis zur Portion P hin. Dabei liegt jeder dieser beiden Soll-Anordnungswerte in einem Toleranzbereich TB, der sich vom Sollwert in Richtung Mulden-Mitte um einen Toleranzwert TW2 erstreckt und in Richtung seitlichen Mulden-Rand um einen Toleranzwert TW1.
- Auch innerhalb der Portion P mit gleichen Soll-Scheiben-Abständen 19-Soll zwischen je zwei aufeinanderfolgenden Scheiben S der Portion P, wobei auch zu dem Soll-Scheiben-Abstand 19-Soll ein - nicht dargestellter - Toleranzbereich TB19 in der Steuerung hinterlegt ist, der sich zusammensetzt aus einem negativen Toleranzwert TW- und einem positiven Toleranzwert TW+.
- Für eine korrekte Lage der Portion B in der Mulde ist natürlich auch Voraussetzung, dass sich die Mulde an der Abwurfstelle und zum Abwurfzeitpunkt - zu dem sie sich vorwärtsbewegt - an der richtigen Position befindet und ebenso zum Zeitpunkt, zu dem bei angehaltenem Mulden-band 22 die Ist-Anordnung mittels der Kamera 26 aufgenommen wird.

Zu diesem Ermittlungs-Zeitpunkt sollte sich die Mulde M des Muldenbandes 22 in einer solchen Position befinden, dass in Querrichtung 11 der rechte Rand R der Mulde M über oder unter einem Maschinen-festen Referenzpunkt R1 verläuft und in Durchlaufrichtung 10* der vordere Rand R über oder unter einem Maschinen-festen Referenzpunkt R2 verläuft. Der Referenzpunkt R1 liegt in der Mitte eines - nicht dargestellten - Toleranzbereiches, der sich in Querrichtung erstreckt und Referenzpunkt R2 liegt in der Mitte eines Toleranzbereiches, der sich in Durchlaufrichtung 10* erstreckt.

Die weiteren Figuren zeigen von der Soll-Anordnung der Portion P abweichende Ist-Anordnungen:
Die **Figuren 3a, b** zeigen - wiederum in Seitenansicht und Aufsicht - eine Ist-Anordnung einer Portion P, die den nachteiligsten Anordnungs-Fehler aufweist, nämlich mit dem vordersten Ende der ersten Scheibe S1 auf dem vorderen Rand R der Mulde M aufliegt. Dadurch wird ein dichtes Versiegeln dieser Mulde durch Aufsiegeln einer Siegelfolie auch auf diesem vorderen Rand R verhindert und die Portion ist Ausschuss.

Mit Hilfe der Kamera K kann der in Längsrichtung 10 vorliegende Anfangs-Abstand 4-Ist ermittelt werden als auch der End-Abstand 6-Ist gegenüber dem jeweiligen vorderen und hinteren Rand R der Mulde M.

Der Anfangs-Abstand und End-Abstand 4, 6 wird vom Rand der Mulde jeweils in Richtung Mitte der Mulde M gemessen, muss also bei korrekter Lage ein positiver Wert sein. Im Fall der **Figuren 3a, b** der Ist-Anfangs-Abstand 4-Ist sogar ein negativer Wert und Ist-Endabstand 4-Ist und 6-Ist liegen beide außerhalb des Toleranzbereiches TB4, TB6 des jeweiligen Abstandes 4, 6.

Die Gestehungs-Parameter für die Portions-Anordnung müssen daher automatisch und gesteuert so verändert werden, dass das vordere und hintere Ende der Portion P innerhalb des Toleranzbereiches TB4 bzw. TB6 des Anfangs-Abstandes 4-Soll sowie des Soll-End-Abstandes 6-Soll liegt.

Aus der ermittelten Position des vorderen und hinteren Endes der Portion kann zusätzlich automatisch die Ist-Portions-Länge 20-lst errechnet werden, die aber in diesem Fall der Soll-Portionslänge 20-Soll entspricht, wobei auch zu der Soll-Portionslänge 20-Soll ein - nicht dargestellter - Toleranzbereich TB20 in der Steuerung hinterlegt ist, der sich zusammensetzt aus einem negativen Toleranzwert TW- und einem positiven Toleranzwert TW+.

Allerdings ist der Scheiben-Abstand 19-Ist - bei korrekter Portions-Länge 20-Soll = 20-Ist - zwischen den Scheiben S2 und S3 S sehr viel geringer und zwischen den Scheiben S3 und S4 sehr viel größer als der Scheiben-Abstand 19-Soll.

Deshalb müssen Gestehungs-Parameter, die die Längsposition der Scheibe S3 innerhalb der Portion P betreffen, so verändert werden, dass danach wieder alle Scheiben den gleichen Soll-Scheiben-Abstand 19-Soll aufweisen.

Die **Figur 4** zeigt eine Ist-Anordnung mit Problemen mit der Querposition einzelner Scheiben S1, S6 der Portion P, von denen die eine in Durchlaufrichtung 10* betrachtet zu weit links und die andere zu weit rechts liegt.

Auch diese Position, also der sowohl linke als auch rechte Ist-Querabstand 18L-Ist, 18R-Ist dieser am weitesten zur Seite vorstehenden Scheiben S1 und S6 und damit der gesamten Portion, werden von der Kamera K ermittelt und dem in den Soll-Anordnungswerten hinterlegten linken und rechten Soll-Querabstand 18L-Soll, 18R-Soll verglichen. Da sich die Ist-Querabstände jeweils außerhalb des zulässigen Toleranzbereiches befinden, wird von der Steuerung bei diesen beiden Scheiben automatisch deren Querposition betreffende Gestehungs-Parameter so verändert, dass diese bei nachfolgenden Portionen in Querrichtung korrekt, also mit einem jeweiligen Soll-Querabstand, in der Mulde M liegen.

Ergänzend oder stattdessen kann als Soll-Anordnungswert auch die Soll-Querbreite 25-Soll einer gesamten Portion hinterlegt sein und mit der Ist-Querbreite 25-Ist verglichen werden, die hier ebenfalls zu groß ist und auch eine Nachstellung des entsprechenden, mindestens einen Gestehungs-Parameters erfordert.

Demgegenüber zeigt **Figur 5** eine Abweichung, bei der zwar in Durchlaufrichtung 10* alle Scheiben S der Portion P in Reihe liegen ohne relative Querabweichung zueinander, aber die gesamte Portion P zu nah am in Durchlaufrichtung 10* linken Rand R der Mulde liegt, also 18L-Ist zu gering ist und auch außerhalb des Toleranzbereiches TB18L um den 18L-Soll herum liegt, was ein nicht attraktives Äußeres der Portion P ergibt.

Hier müssen alle Gestehungs-Parameter, die die Querposition aller Scheiben S der Portion P beeinflussen, automatisch so nachgeregelt werden, dass dieser Mangel für nachfolgende Portionen behoben und dadurch eine optisch ansprechend in der Packung liegende Portion P erreicht wird.

**Figur 6** zeigt eine Soll-Anordnung, bei der sich die Portion P über die freie innere Höhe H der Mulde hinaus erstreckt und damit über das Höhenniveau des Randes R um die Mulde herum.

Dadurch kann es beim Aufsiegeln der - nicht dargestellten - Siegelfolie zu einer Aufwölbung kommen, die optisch nicht ansprechend ist und auch zu einem Faltenwurf und damit Undichtigkeit der Siegelfolie auf dem Rand R der Mulde führen kann.

Eine zu hohe Portion kommt beispielsweise vor, wenn es sich um eine geschindelte Portion aus gefalteten Scheiben S handelt, die also um eine parallel zu ihrer Hauptebene verlaufende Faltachse, meist mittels einer sogenannten FaltStange, zwischen Abtrennen und Auftreffen auf die Portionier-Band gefaltet werden und dadurch in dieser Seitenansicht der **Figur 6** eine etwa Tropfen-förmige Kontur bilden. Hat diese Tropfen-förmige Kontur eine Höhe h, die größer ist als die freie innere Höhe h der Mulde M, so ragt sie zu weit nach oben, wie bei der Scheibe S7 mit einem durchgezogenen Strich angedeutet.

Zu diesem Anordnung-Parameter in Form der Höhe h der Portion existiert meist kein hinterlegter Toleranz-Parameter, denn eine zu niedrige, gefaltete Portion ist in aller Regel optisch akzeptabel, jedoch eine zu hoch über das Höhenniveau des Randes R aufragende Portion nicht akzeptabel.

**Figur 7** zeigt wie die **Figuren 4** **und** **5** eine Portion, bei der es Probleme mit den Querpositionen der Scheiben S1 bis S7 gibt.

In den Anordnungswerten kann auch der maximal zulässige Querversatz 16-max zwischen zwei in Durchlaufrichtung 10* aufeinanderfolgenden Scheiben hinterlegt sein.

In **Figur 7** wandert die Ablageposition in Querrichtung beginnend mit der 1. Scheibe S1 bis zur vorletzten Scheibe S6 immer weiter nach rechts, wobei der Querversatz zwischen zwei aufeinanderfolgenden Scheiben ersichtlich unter dem maximal zulässigen Querversatz 16-max liegt.

Die letzte Scheibe S7 ist dagegen gegenüber der vorletzten Scheibe S6 stark nach links verlagert, und der Querversatz 16-Ist zwischen S6 und S7 ist ersichtlich grösser als der maximal zulässige Querversatz 16-max.

Sofern ein solcher Soll-Anordnungswert vorhanden ist, muss also wenigstens ein Gestehungsparameter verändert werden, um den Querversatz zwischen S6 und S7 zu verringern. Denn ansonsten liegt die Portion durchaus innerhalb der Toleranzbereiche TB für den rechten und linken Rand 18R-Soll und 18L-Soll.

### BEZUGSZEICHENLISTE

- 1: Aufschneide-Maschine, Slicer
- 1*: Steuerung
- 2: Grundgestell
- 3: Messer
- 3: Rotationsachse
- 3": Messerebene, Schneidebene
- 3a: Schneidkante
- 4: Anfangsabstand
- 5: Schneidbrille
- 6a - d: Endabstand
- 7: Schneideinheit
- 8: obere Produktführung, oberes Führungsband
- 9: untere Produktführung, unteres Führungsband
- 10: Zufuhrrichtung, Längsrichtung, axiale Richtung
- 10*: Durchlaufrichtung durch Maschine
- 11: 1. Querrichtung (Breite Slicer)
- 12: 2. Querrichtung (Höhen-Richtung Kaliber)
- 13: Portions-Erzeugungseinheit
- 14: Portions-Anlieferungseinheit
- 15: Verpackungs-Anlieferungseinheit
- 16: Querversatz
- 17: Abförder-Einheit
- 17a, b, c: Portionier-Band, Abförderer
- 18: Quer-Abstand
- 19: Scheibenabstand
- 20: Portions-Länge
- 21: Einleger
- 22: Muldenband
- 23: Mulden-Längsabstand
- 24: Höhenabstand
- 25: Querbreite
- 26: Kamera

- 100: Verpackungsmaschine

- 500: Verpackungs-Vorrichtung

- HA-Soll: Höhenabstand
- M: Mulde, Verpackungs-Mulde
- P: Portion
- R: Rand
- R1, R2: Referenzpunkt
- S: Scheibe
- V: Verpackungselement

## Patentansprüche

1. **Verfahren** zum automatischen Erreichen einer vorgegebenen Portions-Anordnung, nämlich einer vorgegebenen Portions-Form und/oder Portions-Größe und/oder Portions-Lage, einer auf einem Verpackungselement (V), insbesondere in einer Verpackungs-Mulde (M) eines Verpackungselements (V), abgelegten, insbesondere geschindelten, Portion (P) von Scheiben (S) **dadurch gekennzeichnet, dass**
- die Ist-Anordnung im abgelegten Zustand der Portion P ermittelt wird,
- die Ist-Anordnung mit einer vorgegebenen Soll-Anordnung verglichen wird,
- bei festgestellter Abweichung der Ist-Anordnung von der Soll-Anordnung um mehr als einen dazu vorgegebenen Toleranzbereich (TB) hinaus,
- die Gestehungs-Parameter der vorgelagerten Portions-Erzeugungseinheit (13) und/oder Portions-Anlieferungseinheit (14) und/oder der Verpackungs-Anlieferungseinheit (15) in Abhängigkeit der festgestellten einen oder mehreren Abweichungen automatisch so verändert werden, dass die Ist-Anordnung innerhalb aller Toleranzbereiche um die Soll-Anordnungswerte der vorgegebenen Soll-Anordnung liegt.

2. Verfahren nach Anspruch 1,
**dadurch gekennzeichnet, dass**
- die Feststellung der Abweichung berührungslos erfolgt,
- insbesondere mittels optischer Verfahren.

3. Verfahren nach einem der vorhergehenden Ansprüche,
**dadurch gekennzeichnet, dass**
- die Veränderung der Gestehungs-Parameter erst erfolgt, wenn die festgestellte Abweichung als Wiederholungsfehler ermittelt wurde,
- insbesondere die festgestellte Abweichung mindestens dreimal, insbesondere mindestens fünfmal, insbesondere mindestens siebenmal unmittelbar hintereinander festgestellt wurde oder mindestens sechsmal, besser mindestens achtmal pro zehn Messvorgängen festgestellt wurde.

4. Verfahren nach einem der vorhergehenden Ansprüche,
**dadurch gekennzeichnet, dass**
- die Ist-Anordnung bei stillstehendem Verpackungselement (V) ermittelt wird,
- insbesondere unmittelbar nach dem Ablegen der Portion (P).

5. Verfahren nach einem der vorhergehenden Ansprüche,
**dadurch gekennzeichnet, dass**
- die vorgegebene Soll-Anordnung als Soll-Anordnungswerte eine einen positiven Soll-Anfangs-Abstand (4-Soll) sowie einen positiven Soll-End-Abstand (6-Soll) in Längsrichtung (definieren) zwischen der Portion und dem Verpackungselement, insbesondere dem Rand der Mulde, umfasst,
- bei einem negativen Ist-Anfangs-Abstand (4-Ist), also Hinausragen der Portion in Längsrichtung über den Rand der Mulde nach vorne,
- insbesondere entweder als Gestehungs-Parameter der vorgelagerten Portions-Anlieferungseinheit (14) deren Anlieferungs-Geschwindigkeit reduziert wird
- oder als Gestehungs-Parameter der vorgelagerten Verpackungs-Anlieferungs-Einheit (15) deren Anlieferungs-Geschwindigkeit so erhöht wird,
- dass danach kein negativer Ist-Anfangs-Abstand (4-Ist) mehr vorliegt,
- insbesondere bei einem negativen Ist-End-Abstand (6-Ist) umgekehrt vorgegangen wird.

6. Verfahren nach einem der vorhergehenden Ansprüche,
**dadurch gekennzeichnet, dass**
- die vorgegebene Soll-Anordnung als Soll-Anordnungswerte einen positiven, insbesondere linken und rechten, Soll-Quer-Abstand (18L-Soll, 18R-Soll) der Portion (P) zu mindestens einem Rand (R) des Verpackungselementes V, insbesondere dem Rand (R) der Mulde (M), hin aufweist,
- bei einem zu geringen positiven oder gar negativen Ist-Anfangs-Abstand (18L-Ist, 18R-Ist), also Hinausragen der Portion P in Längsrichtung über den Rand (R) der Mulde (M) zur Seite,
- insbesondere entweder als Gestehungs-Parameter der vorgelagerten Portions-Anlieferungseinheit (13) deren Anlieferungs-Geschwindigkeit reduziert wird
- oder als Gestehungs-Parameter der vorgelagerten Verpackungs-Anlieferungs-Einheit (15) deren Anlieferungs-Geschwindigkeit so erhöht wird,
- dass danach kein negativer Ist-Querabstand (18L-Ist, 18R-Ist) mehr vorliegt,
- insbesondere bei einem negativen Ist-Querabstand (18L-Ist, 18R-Ist) umgekehrt vorgegangen wird.

7. Verfahren nach einem der vorhergehenden Ansprüche,
**dadurch gekennzeichnet, dass**
- die vorgegebene Soll-Anordnung als Soll-Anordnungswerte den positiven Soll-Anfangs-Abstand (4-Soll) sowie den positiven Soll-End-Abstand (6-Soll) in Längsrichtung (10*) zwischen der Portion und dem Verpackungselement (V), insbesondere dem Rand der Mulde (M), umfasst,
- bei einem um einen Toleranzwert größeren Ist-Anfangs-Abstand (4-Ist) als Ist-End-Abstand (4-Ist)
- entweder als Gestehungs-Parameter der vorgelagerten Portions-Anlieferungseinheit (14) deren Anlieferungs-Geschwindigkeit reduziert wird
- oder als Gestehungs-Parameter der vorgelagerten Verpackungs-Anlieferungseinheit (15) deren Anlieferungs-Geschwindigkeit so erhöht wird,
- dass danach Ist-Anfangs-Abstand (4-Ist) als auch Ist-End-Abstand (6-Ist) innerhalb des jeweiligen Toleranzbereiches um den Soll-Anfangs-Abstand (4-Soll) bzw. den Soll-End-Abstand (6-Soll) liegt,
- insbesondere bei einem um eine Toleranzwert kleineren Anfangs-Abstand als End-Abstand umgekehrt vorgegangen wird.

8. Verfahren nach einem der vorhergehenden Ansprüche,
**dadurch gekennzeichnet, dass**
- die vorgegebene Soll-Anordnung als Soll-Anordnungswert den Soll-Scheibenabstand (19-Soll) in Längsrichtung (10*) zwischen den Scheiben (S) der Portion umfasst,
- bei einem an einer Stelle der Portion um eine Toleranzwert kleineren Ist-Ist-Scheibenabstand (19-Ist)
- als Gestehungs-Parameter der vorgelagerten Portions-Erzeugungseinheit (13) deren Vorschub-Geschwindigkeit an dieser Stelle der Portion_so erhöht wird,
- dass danach der Ist-Längs-Abstand (19-Ist) innerhalb des Toleranzbereiches um den Soll-Längs-Abstand (19-Soll) liegt,
- insbesondere bei einem an einer Stelle der Portion um einen Toleranzwert größeren Scheibenabstand (19) umgekehrt vorgegangen wird.

9. Verfahren nach einem der vorhergehenden Ansprüche,
**dadurch gekennzeichnet, dass**
- die vorgegebene Soll-Anordnung als Soll-Anordnungswert die Soll-Länge (20-Soll) der Portion in Längsrichtung (10*) umfasst,
- bei einer um eine Toleranzwert größeren Ist-Länge (20-Ist)
- als Gestehungs-Parameter der vorgelagerten Portions- Erzeugungseinheit (13) deren Vorschub-Geschwindigkeit zwischen den, insbesondere allen, Scheiben der Portion entsprechend so reduziert wird
- dass danach die Ist-Länge (20-Ist) einer so erstellten Portion (P) innerhalb des Toleranzbereiches (TB) um die Soll-Länge (20-Soll) liegt.

10. Verfahren nach einem der vorhergehenden Ansprüche,
**dadurch gekennzeichnet, dass**
- die vorgegebene Soll-Anordnung als Soll-Anordnungswert den maximal zulässigen Soll-Querversatz (16-Soll) quer, insbesondere lotrecht, zur Längsrichtung zwischen den Scheiben der Portion umfasst,
- bei einem an einer Stelle der Portion um eine Querabstand -Toleranz größeren Ist- Querversatz (16-Ist)
- als Gestehungs-Parameter der vorgelagerten Portions-Erzeugungseinheit (13) dessen für die Querpositionierungs-Erzeugung relevanter Parameter so verändert wird,
- dass danach der Ist- Querversatz (16-Ist) kleiner ist als der maximal zulässige Soll- Querversatz (16-Soll).

11. Verfahren nach einem der vorhergehenden Ansprüche,
**dadurch gekennzeichnet, dass**
- die vorgegebene Soll-Anordnung als Soll-Anordnungswert die maximale Soll-Quer-Breite (25-Soll) der Portion (P) quer zur, insbesondere lotrecht zur, Längsrichtung der Portion (P) umfasst,
- bei einer größeren Ist-Quer-Breite (25-Ist)
- als Gestehungs-Parameter der vorgelagerten Portions-Erzeugungseinheit (13) deren für die Querpositionierungs-Erzeugung relevanten Parameter so verändert werden,
- dass danach der Ist-Quer-Abstand (25-Ist) kleiner ist als der maximal zulässige Soll-Quer-Abstand (25-Soll).

12. Verfahren nach einem der vorhergehenden Ansprüche,
**dadurch gekennzeichnet, dass**
- die vorgegebene Soll-Anordnung als Soll-Anordnungswert den Soll-Mulden-Längsabstand (23-Soll) in Längsrichtung (10), insbesondere zum Zeitpunkt des Beginns des Ablegens einer Portion oder zum Zeitpunkt des Ermittelns der Ist-Anordnung, zwischen der Mulde und einem Referenzpunkt (R1, R2) der Umgebung umfasst,
- bei einem um mehr als einen zugehörigen Toleranzwert größeren Ist-Mulden-Längsabstand (23-Ist)
- als Gestehungs-Parameter der vorgelagerten Verpackungs-Anlieferungseinheit (15) deren Anlieferungs-Geschwindigkeit so erhöht wird,
- dass danach der Ist-Mulden-Längsabstand (23-Ist) innerhalb des jeweiligen Toleranzbereiches um den Soll-Mulden-Längsabstand (23-Soll) liegt,
- insbesondere bei einem um einen zugehörigen Toleranzwert kleineren Anfangs-Abstand als End-Abstand umgekehrt vorgegangen wird.

13. Verfahren nach einem der vorhergehenden Ansprüche,
**dadurch gekennzeichnet, dass**
- die vorgegebene Soll-Anordnung als Anordnungs-Wert
- entweder einen negativen Soll-Höhen-Abstand (24-Soll) in vertikaler Richtung zwischen dem oberen Rand (R) der Mulde (M) und der Portion (P) umfasst
- oder eine maximale Soll-Höhe (h-Soll) der Portion (P) umfasst, der maximal der freien inneren Höhe (H) der Mulde (M) entspricht,
- bei einem positiven Ist-Höhen-Abstand (24-Ist) oder einer Ist-Höhe (h-Ist), also Hinausragen der Portion (P) in vertikaler Richtung über den oberen Rand (R) der Mulde (M),
- als Gestehungs-Parameter der vorgelagerten Portions-Erzeugungseinheit (13) deren für die Höhe der Portion (P) relevanter Parameter so verändert wird
- dass danach kein positiver Ist-Höhen-Abstand (24) mehr vorliegt.

14. Verfahren nach einem der vorhergehenden Ansprüche,
**dadurch gekennzeichnet, dass**
das automatische Steuern der Verpackung-Vorrichtung (100), insbesondere der Aufschneide-Maschine (1), beinhaltet
- das Steuern der Geschwindigkeit des Portionierbandes (17a),
und/oder
- das Steuern der Schrittlänge des schrittweise laufenden Portionierbandes (17a),
und/oder
- das Steuern des zeitlichen Abstandes zwischen den einzelnen Abtrenn-Vorgängen
und/oder
- die Drehzahl des Messers (3)
und/oder
- die Geschwindigkeit und/oder Strecke des Querversatzes eines Querversatz-Bandes
und/oder
- die Vorschubkraft der oberen und/oder unteren Produktführung (8, 9) und/oder
- Laufgeschwindigkeit und/oder Querposition des Muldenbandes (22), insbesondere zum Zeitpunkt des Portions-Abwurfes
und/oder
- Laufgeschwindigkeit des Einlegers (21), insbesondere zum Zeitpunkt des Portions-Abwurfes.

15. **Verpackungs-Vorrichtung** (500) mit
- einer Verpackungs-Maschine (100), insbesondere einer Tiefzieh-Verpackungsmaschine (100), zum Verpacken einer auf einem Verpackungselement (V), insbesondere in der Verpackung-Mulde (M) eines Mulden-Bandes (22), abgelegten geschindelten Portion (P) aus Scheiben (S) und
- einer Portions-Anlieferungseinheit (14), welche die Portionen (P) zur Verpackungs-Maschinen (100) anliefert
- einer Portions-Erzeugungseinheit (13), welche die Portionen (P) erzeugt,
- einer Verpackungs-Anlieferungseinheit (15), welche die Verpackungselemente, insbesondere das Mulden-Band (22), zur Verpackung-Maschine (100) anliefert
**dadurch gekennzeichnet, dass**
- die Verpackungs-Maschine (100) einen Sensor (101) aufweist zum Ermitteln der Portions-Anordnung relativ zum Verpackungselement (V), insbesondere zur Verpackung-Mulde (M),
- eine datentechnisch mit dem Sensor (101) verbundene Steuerung (100*) vorhanden ist, die in der Lage ist, Gestehungs-Parameter der vorgelagerten Portions-Erzeugungseinheit (13) und/oder Portions-Anlieferungseinheit (14) und/oder der Verpackungs-Anlieferungseinheit (15) zu steuern,
- insbesondere das Verfahren nach einem der vorhergehenden Ansprüche durchzuführen.

16. Verpackungs-Vorrichtung nach Anspruch 15,
**dadurch gekennzeichnet, dass**
die Steuerung (100*) zumindest alle beweglichen Teile der Verpackungs-Maschine (100) steuert und in Daten-technischer Verbindung mit den Steuerungen der Portions-Anlieferungseinheit (14) und/oder der Portions-Erzeugungseinheit (13), und/oder der Verpackungs-Anlieferungseinheit (15) steht.

17. Verpackungs-Vorrichtung nach einem der vorhergehenden Vorrichtungs-Ansprüche,
**dadurch gekennzeichnet, dass**
- die Portions-Erzeugungseinheit (13) die Abförder-Einheit (17), insbesondere deren Portionier-Band (17a), insbesondere einer Aufschneide-Maschine (1) oder eine davon separate Einheit ist,
- die Portions-Anlieferungseinheit (14) funktional zwischen der Portions-Erzeugungseinheit (13), insbesondere dem Portionier-Band (17a), und der Verpackungs-Maschine (100) angeordnet ist.
